# EUROPÄISCHE PATENTANMELDUNG

(11) **EP 2 492 147 A2**
(43) Veröffentlichungstag der Anmeldung: **29.08.2012**
(21) Anmeldenummer: 12155393.7
(22) Anmeldetag: 14.02.2012
(51) Int. Cl.: B60R 7/04, B60R 11/02, B60N 2/46, B60N 3/10

(54) **Kraftfahrzeug mit einem Ablagefach**

(30) Priorität: 24.02.2011 DE 102011004623
(71) Anmelder: Bayerische Motoren Werke Aktiengesellschaft, 80809 München (DE)
(72) Erfinder: Könsgen, Stefan, 84036 Landshut (DE); Sieghart, Oliver, 80995 München (DE)

(57) **Zusammenfassung**

Aus der DE 10 2009 034 958 ist bereits ein Befestigungssystem für Ablage-und Transportgegenstände in einem Innenraum eines Kraftfahrzeuges bekannt. Aufgabe der Erfindung ist es, ein Kraftfahrzeug mit einem Fahrzeuginnenraum zu schaffen, bei dem ein variables Befestigungssystem für Ablage- und Transportgegenstände vorgesehen ist, das eine einfache Handhabung ermöglicht.

Dies wird dadurch erreicht, dass in dem Hohlraum eines Gehäuses des Ablagefachs eine Haltevorrichtung (9,10) bedarfsweise angeordnet ist.

## Beschreibung

Aus der DE 10 2009 034 958 ist bereits ein Kraftfahrzeug mit einem Schienenweg bekannt, der zwei zueinander beabstandete, parallel verlaufende Schienen aufweist. In den Zwischenraum zwischen den Schienen sind verschiebbare Schlitten angeordnet. Der Schlitten kann mit einem darauf angeordneten Funktionsmodul oder ohne einem darauf angeordneten Funktionsmodul entlang der beiden Schienen an einer von der Bedienungsperson gewünschten Position befestigt werden.

Das auf dem jeweiligen Schlitten angeordnete Funktionsmodul kann beispielsweise eine Ladeplatte, ein Behälter, ein Mobiltelefon, ein sonstiges Consumer-Elektronik-Gerät, ein Cupholder oder eine Armlehne sein.

Der Schlitten besteht beispielsweise aus einer oberen, im Wesentlichen rechteckigen Platte, deren Länge und Breite größer ist als der Abstand zwischen den beiden beabständeten Schienen. In einer Verriegelungsposition liegt die obere Platte mit ihrer Längsausrichtung parallel zu den beiden Schienen auf einer jeweiligen Oberfläche der jeweiligen Schiene auf.

Über einen mittleren Abschnitt ist eine längliche untere Platte mit der oberen Platteverbunden. Die untere Platte ist um 90° zu der Längsausrichtung der oberen Platte verdreht. Die Länge des mittleren Abschnittes ist so gewählt, dass der Schlitten um den mittleren Abschnitt in dem Zwischenraum zwischen den beiden Schienen drehbar ist. Die Breite der unteren Platte ist geringer als der Abstand zwischen den beiden Schienen.

In einem ersten Montageschritt wird die untere Platte in den Zwischenraum zwischen den beiden Schienen eingesetzt. In einem zweiten Montageschritt wird der Schlitten um 90° verdreht, so dass die untere Platte den Schlitten gegen ein Herausheben durch Reibschluß und/oder Formschluß haltert.

Aufgabe der Erfindung ist es, ein Kraftfahrzeug mit einem Fahrzeuginnenraum zu schaffen, bei dem ein variables Befestigungssystem für Ablage- und Transportgegenstände vorgesehen ist, das eine einfache Handhabung ermöglicht.

Diese Aufgabe wird durch die Merkmale des Anspruchs 1 gelöst.

Bei einem erfindungsgemäßen Kraftfahrzeug weist ein Fahrzeuginnenraum auf, in dem mindestens ein Ablagefach vorgesehen ist. Das Ablagefach hat ein Gehäuse, das einen Hohlraum bildet. In dem Hohlraum des Gehäuses ist vorteilhafterweise eine Haltevorrichtung bedarfsweise angeordnet. Die Haltevorrichtung weist jeweils zwei parallel zueinander verlaufende Längselemente oder Schienen auf, die jeweils um einen Zwischenraum mit einem vorbestimmten Abstand voneinander beabstandet sind. In der Haltevorrichtung ist bedarfsweise ein Zusatzbauteil lösbar gehaltert.

In einer vorteilhaften Ausführungsform weist das Zusatzbauteil einen unteren, länglichen Abschnitt auf, der über einen Verbindungsabschnitt mit einem oberen, länglichen Abschnitt verbunden ist.

Vorteilhafterweise hat die Haltevorrichtung ein Gehäuse, das ein Gußbauteil aus Kunststoff oder Metall ist.

Im Gehäuse des Ablagefaches sind in einer vorteilhaften Ausführungsform Aussparungen vorgesehen, wobei die Aussparungen zur Halterung des Gehäuses der Haltevorrichtung dienen.

Die Aussparungen sind vorteilhafterweise so ausgerichtet, dass die Haltevorrichtung von unten in die Aussparungen des Ablagefaches durch eine Schiebebewegung montierbar ist.

In einer vorteilhaften Ausführungsform ist der Boden des Gehäuses des Ablagefaches mit dem Boden des Gehäuses der Haltevorrichtung über Befestigungsmittel befestigt.

Vorteilhafterweise ist auf dem Boden des Gehäuses des Ablagefaches eine Einlegematte zum Abdecken der Befestigungsstellen gelegt.

Das Gehäuse der Haltevorrichtung ist in einer vorteilhaften Ausführungsform in dem Gehäuse des Ablagefaches so angeordnet, dass kein Spalt oder nur ein geringer Spalt gebildet ist.

Die Haltevorrichtung ist vorteilhafterweise ein Einsatzbauteil, das von oben in das Ablagefach montierbar ist.

In einer vorteilhaften Ausführungsform sind die beiden Schienen des Einbauteils über zwei Brücken-Verbindungsbauteile miteinander verbunden, wobei das jeweilige Brücken-Verbindungsbauteil an jeweils einem Ende der Schiene befestigt ist.

Ausführungsformen der Erfindung werden nachstehend anhand der Zeichnungen beispielshalber beschrieben. Dabei zeigen:
- Fig. 1: eine Ansicht von oben auf eine Mittelkonsole eines Kraftfahrzeuges, bei der in einem kleineren, topfförmigen Ablagefach eine Halterungsvorrichtung angeordnet ist,
- Fig, 2: eine Ansicht von oben auf eine Mittelkonsole entsprechend der Fig. 1, wobei in einem weiteren, größeren, topfförmigen Ablagefach nachträglich eine Haltevorrichtung angeordnet ist,
- Fig. 3: eine perspektivische Ansicht einer nachrüstbaren Haltevorrichtung,
- Fig. 4: eine perspektivische Ansicht von unten auf ein hinteres Ende der Mittelkonsole, in der sich das Ablagefach befindet, wobei sich die in der Fig. 3 gezeigte Haltevorrichtung in einer Vormontageposition vor dem Gehäuse des Ablagefaches befindet,
- Fig. 5: eine perspektivische Ansicht eines Bauteils, das aus der DE 10 2009 034 958 bekannt ist und das in der in den Fig. 2 und 3 gezeigten Haltevorrichtung einsetzbar und befestigbar ist,
- Fig. 6: eine perspektivische Darstellung auf zwei durch einen Zwischenraum beabstandete Schienen der in der Fig. 3 gezeigten Haltevorrichtung und ein in den Zwischenraum verschiebbar angeordnetes Bauteil,
- Fig. 7: eine Querschnittdarstellung längs der Linie VII-VII in der Fig. 2, die zusätzlich das in der Fig. 5 gezeigte Bauteil zeigt, das in der nachträglich angeordneten Haltevorrichtung befestigt ist.

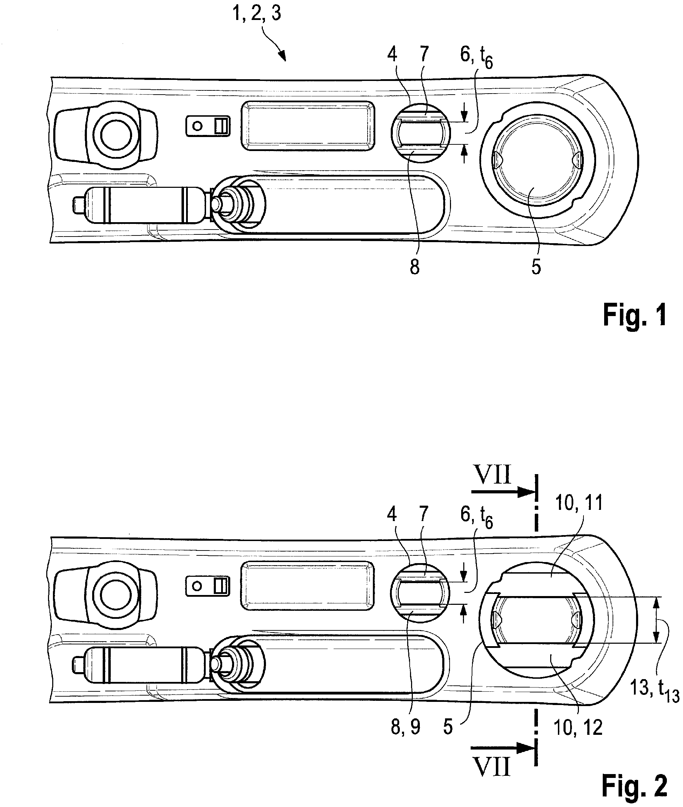

Die Fig. 1 zeigt einen Abschnitt einer Mittelkonsole 2 eines Kraftfahrzeuges 1, die in einem nicht weiter dargestellten Fahrzeuginnenraum zwischen zwei Vordersitzen angeordnet ist.

An einem hinteren Ende 3 der Mittelkonsole 2 sind zwei rotationssymmetrische Ablagefächer 4 und 5 mit unterschiedlicher Größe vorgesehen. In dem kleineren Ablagefach 4 sind zwei, durch einen Zwischenraum 6 mit einem Abstand t₆ beabstandete Längselemente oder Schienen 7, 8 einer Haltevorrichtung 9 dargestellt. Die Haltevorrichtung 9 war von Anfang an in dem kleineren Ablagefach 4 integriert.

Im Unterschied zu der Fig. 1 ist das in der Fig. 2 gezeigte Ablagefach 5 mit einer Haltevorrichtung 10 nachgerüstet worden. Die Haltevorrichtung 10 weist ebenfalls zwei Längselemente oder Schienen 11 und 12 auf, die parallel zueinander verlaufen und um einen Zwischenraum 13 mit einem Abstand t₁₃ voneinander beabstandet sind. Statt einem in den Figuren gezeigten runden Querschnitt der Längselemente oder Schienen 11 und 12 können die Schienen 11 und 12 einen beliebigen Querschnitt aufweisen, der so gestaltet sein muss, dass eine nachträgliche Montage möglich ist.

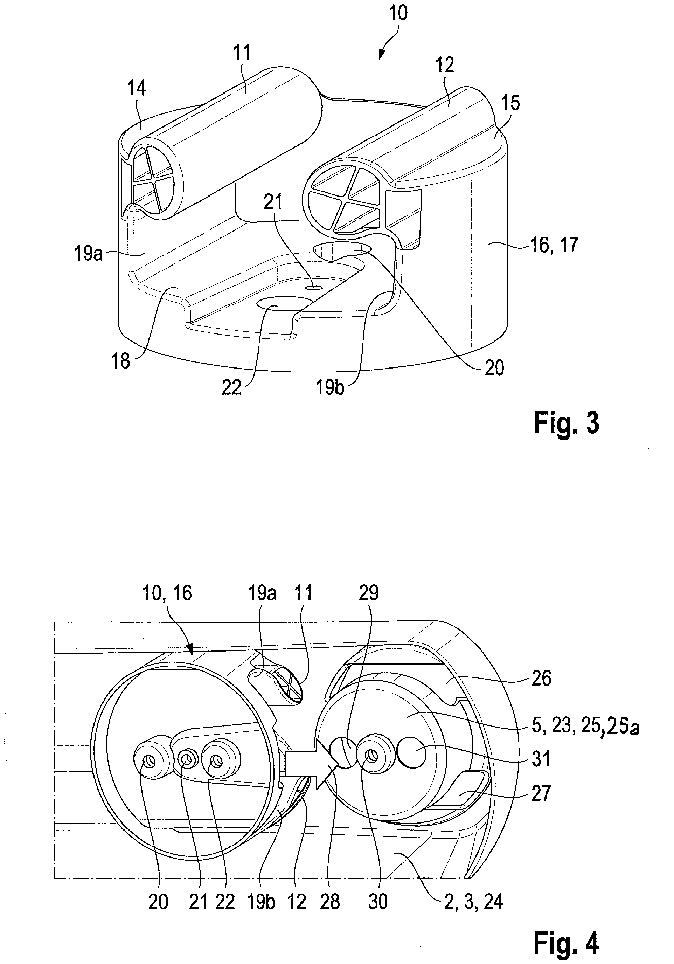

Die Fig. 3 zeigt eine perspektivische Ansicht der in das Ablagefach 5 nachgerüsteten Haltevorrichtung 10. Die Haltevorrichtung 10 kann aus einem Kunststoff oder aus einem Metall, beispielsweise Magnesium, insbesondere als Gußbauteil hergestellt sein.

Die beiden Schienen 11, 12 sind jeweils an einem Abschnitt 14, 15 eines Gehäuses 16 einstückig ausgebildet. Das Gehäuse 16 ist topfartig mit einer ringförmigen Seitenwand 17 und einem Boden 18 versehen. In der ringförmigen Seitenwand 17 ist eine Aussparung 19a, 19b ausgebildet. Ferner sind am Boden 18 drei Durchgangsöffnungen 20, 21, 22 zur Befestigung an einem in der Fig. 4 gezeigten Boden 23 des Ablagefaches 5 vorgesehen.

Die Fig. 4 zeigt eine Ansicht auf eine Innenfläche 24 des hinteren Endes 3 der Mittelkonsole 2. Das Ablagefach 5 weist in der gezeigten Ausführungsform ebenfalls ein topfförmiges Gehäuse 25 auf. Das Gehäuse 25 bildet einen Hohlraum 25a zur Aufnahme oder Ablage von Gegenständen. Das Gehäuse 25 ist mit zwei Aussparungen 26, 27 versehen, deren Form und Größe den beiden Schienen 11, 12 der Haltevorrichtung 10 angepasst ist.

Entsprechend dem in der Fig. 4 gezeigten Pfeil 28 ist das Gehäuse 16 der Haltevorrichtung 10 auf das Gehäuse 25 des Ablagefaches 5 aufschiebbar. Am Boden 23 des Gehäuses 25 sind entsprechend der Lage und Größe der Durchgangsöffnungen 20, 21, 22 der Haltevorrichtung 10 Durchgangsöffnungen 29, 30, 31 ausgebildet.

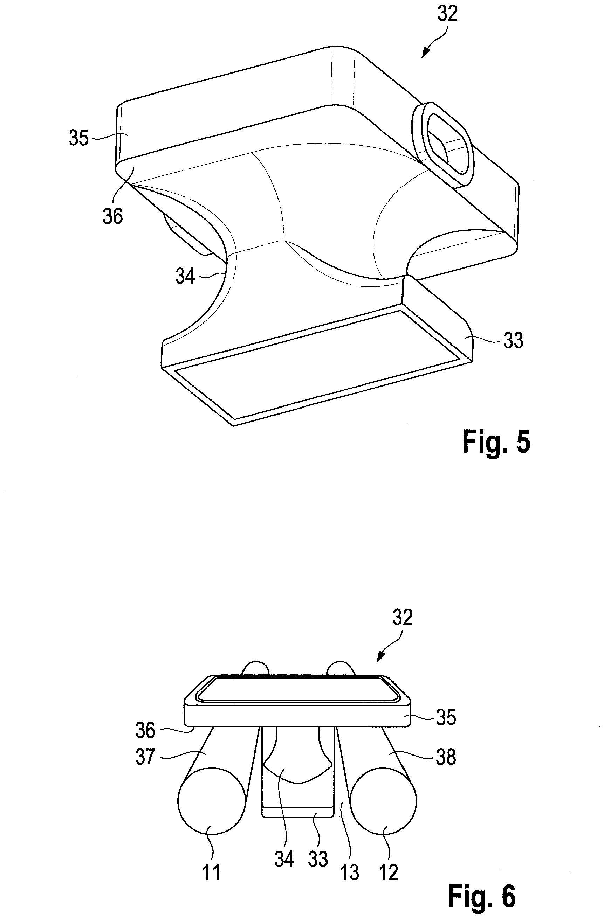

In den Fig. 5, 6 und 7 ist ein Zusatzbauteil 32 dargestellt, das aus der DE 10 2009 034 958 bekannt ist. Es wird vollinhaltlich auf die Offenbarung der DE 10 2009 034 958 Bezug genommen. Entsprechend der Fig. 5 weist Zusatzbauteil 32 einen Fuß oder unteren, länglichen Abschnitt 33, einen Verbindungsabschnitt 34 sowie einen oberen, länglichen Abschnitt 35 auf. Der obere, längliche Abschnitt 35 kann Zusatzfunktionen aufweisen.

Die Fig. 6 zeigt prinzipiell den ersten Schritt zur Montage des Zusatzbauteils 32. Der untere Abschnitt 33 wird in den Zwischenraum 13 zwischen den beiden Schienen 11 und 12 eingefügt, bis eine Unterseite 36 des oberen, länglichen Abschnittes 35 auf jeweils eine Außenfläche 37, 38 der jeweiligen Schiene 11, 12 aufliegt.

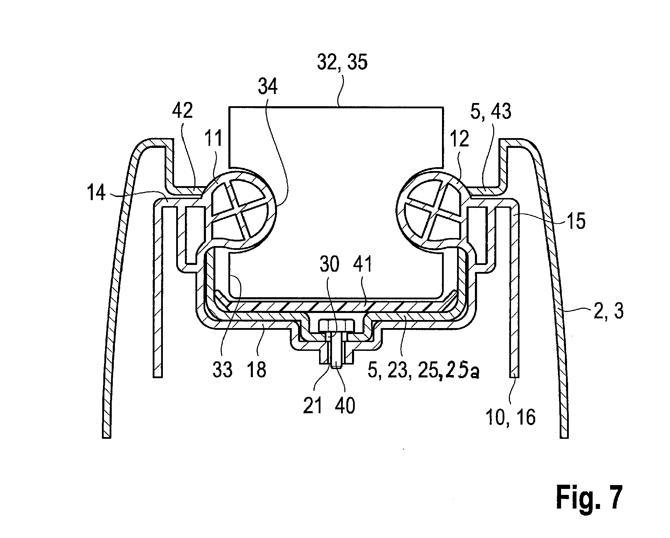

Je nach Länge der Schienen 11, 12 ist das Zusatzbauteil 32 zwischen den Schienen 11, 12 in eine gewünschte Position verschiebbar. Durch eine Drehung um 90° des Zusatzbauteils 32 erfolgt eine Befestigung des Zusatzbauteils 32 an den Schienen 11 und 12, wie dies aus der Schnittdarstellung der Fig. 7 hervorgeht. In der Verriegelungsposition 39 befindet sich das Zusatzbauteil 32 in der gewünschten Position.

Aus der Fig. 7 geht ferner hervor, dass der Boden 18 der Haltevorrichtung 10 über ein Befestigungsmittel 40, beispielsweise eine Schraube, am Boden 23 des Gehäuses 25 des Ablagefaches 5 befestigt ist. Aus optischen Gründen ist auf den Boden 23 des Gehäuses 25 eine Einlegematte 41 angeordnet. Die Einlegematte 41 ist in der Regel ein flexibles, abwaschbares Material, das beispielsweise aus Kunststoff hergestellt ist.

Die Form der Schienen 11 und 12 sowie der sich daran anschließenden Abschnitte 14, 15 ist so bemessen, dass kein Spalt oder nur ein geringer Spalt zu einem daran anschließenden Abschnitt 42, 43 des Gehäuses 25 des Ablagefaches 5 entsteht. In der gezeigten Ausführungsform verlaufen die Abschnitte 42, 43 des Gehäuses 25 in einer waagrechten Ebene.

## Patentansprüche

1. Kraftfahrzeug mit einem Fahrzeuginnenraum, in dem mindestens ein Ablagefach vorgesehen ist, wobei das Ablagefach ein Gehäuse aufweist, das einen Hohlraum bildet,
**dadurch gekennzeichnet, dass** in dem Hohlraum (25a) des Gehäuses (25) eine Haltevorrichtung (9, 10) bedarfsweise angeordnet ist.

2. Kraftfahrzeug nach Anspruch 1,
**dadurch gekennzeichnet, dass** die Haltevorrichtung (9, 10) jeweils zwei parallel zueinander verlaufende Längselemente (7, 8; 11, 12) aufweist, die jeweils um einen Zwischenraum (6, 13) mit einem Abstand t₆, t₁₃ voneinander beabstandet sind und dass ein Zusatzbauteil (32) bedarfsweise in der Haltevorrichtung (9, 10) lösbar gehaltert ist.

3. Kraftfahrzeug nach Anspruch 1 oder 2,
**dadurch gekennzeichnet, dass** das Zusatzbauteil (32) einen unteren, länglichen Abschnitt (33) aufweist, der über einen Verbindungsabschnitt (34) mit einem oberen, länglichen Abschnitt (35) verbunden ist.

4. Kraftfahrzeug nach einem der vorhergehenden Ansprüche,
**dadurch gekennzeichnet, dass** die Haltevorrichtung (10) ein Gehäuse (16) hat, das ein Gußbauteil aus Kunststoff oder Metall ist.

5. Kraftfahrzeug nach einem der vorhergehenden Ansprüche,
**dadurch gekennzeichnet, dass** im Gehäuse (25) des Ablagefaches (5) Aussparungen (26, 27) vorgesehen sind und dass die Aussparungen (26, 27) zur Halterung des Gehäuses (16) der Haltevorrichtung (10) dienen.

6. Kraftfahrzeug nach Anspruch 5,
**dadurch gekennzeichnet, dass** die Aussparungen (26, 27) so ausgerichtet sind, dass die Haltevorrichtung (10) von unten in das Ablagefach (5) durch eine Schiebebewegung montierbar ist.

7. Kraftfahrzeug nach einem der vorhergehenden Ansprüche,
**dadurch gekennzeichnet, dass** der Boden (23) des Gehäuses (25) des Ablagefaches (5) mit dem Boden (18) des Gehäuses (16) der Haltevorrichtung (10) über Befestigungsmittel (40) befestigt ist.

8. Kraftfahrzeug nach einem der vorhergehenden Ansprüche,
**dadurch gekennzeichnet, dass** auf dem Boden (23) des Gehäuses (25) des Ablagefaches (5) eine Einlegematte (41) zum Abdecken der Befestigungsstellen (29, 30, 31) gelegt ist.

9. Kraftfahrzeug nach einem der vorhergehenden Ansprüche,
**dadurch gekennzeichnet, dass** das Gehäuse (16) der Haltevorrichtung (10) in dem Gehäuse (25) des Ablagefaches (5) so angeordnet ist, dass kein Spalt oder nur ein geringer Spalt gebildet ist.

10. Kraftfahrzeug nach einem der vorhergehenden Ansprüche,
**dadurch gekennzeichnet, dass** die Haltevorrichtung (10) ein Einsatzbauteil ist, das von oben in das Ablagefach (4, 5) montierbar ist.

11. Kraftfahrzeug nach Anspruch 10,
**dadurch gekennzeichnet, dass** die beiden Schienen (7, 8; 11, 12) des Einbauteils über jeweils eine Brücke miteinander verbunden sind, und dass die jeweilige Brücke an jeweils einem Ende der Schienen (7, 8; 11, 12) befestigt ist.
